# EUROPÄISCHE PATENTSCHRIFT

(11) **EP 1 021 009 B1**
(45) Veröffentlichungstag und Bekanntmachung des Hinweises auf die Patenterteilung: **13.04.2005**
(21) Anmeldenummer: 00440009.9
(22) Anmeldetag: 14.01.2000
(51) Int. Cl.: H04J 3/06

(54) **Synchronisation eines Netzelementes in einem synchronen digitalen Nachrichtenübertragungsnetz**
Synchronisation of a network element in a synchronous digital communication network
Synchronisation d'élément de réseau dans un réseau de communication synchrone numérique

(30) Priorität: 16.01.1999 DE 19901588
(43) Veröffentlichungstag der Anmeldung: 19.07.2000
(73) Patentinhaber: ALCATEL, 75008 Paris (FR)
(72) Erfinder: Wolf, Michael Dr., 74395 Mundelsheim (DE)
(74) Vertreter: Rausch, Gabriele, Dr.

(56) Entgegenhaltungen:
- EP-A- 0 723 344
- EP-A- 0 849 904
- WO-A-92/07433

## Beschreibung

Die Erfindung betrifft ein Verfahren zur Synchronisation von Netzelementen in einem synchronen digitalen Nachrichtenübertragungsnetz nach dem Oberbegriff des Anspruchs 1, ein Netzelement für ein synchrones digitales Nachrichtenübertragungsnetz nach dem Oberbegriff des Anspruchs 6 und eine Netzwerkverwaltungseinrichtung nach Anspruch 7.

Die Netzelemente eines synchronen digitalen Nachrichtenübertragungsnetzes arbeiten nach den Empfehlungen der ITU-T für synchrone digitale Hierarchie (NET) oder Synchronous Optical Network (SONET). Unter Netzelementen werden Add/Drop-Multiplexer, Crossconnects oder Leitungsmultiplexer verstanden. Bei der Nachrichtenübertragung in einem solchen Nachrichtenübertragungsnetz kommt es wesentlich darauf an, daß alle Netzelemente synchron miteinander arbeiten. Dies wird durch eine gegenseitige Synchronisation der Netzelemente oder durch Master/Slave-Synchronisation erreicht, indem jedes Netzelement von einem empfangenen Nachrichtensignal ein Taktsignal ableitet und seinen internen Taktgenerator auf dieses externe Taktsignal synchronisiert. Zur Takteinspeisung eines hochgenauen Referenztaktes in das Netz dienen ein oder mehrere primäre Referenzta ktgeneratoren.

Um die Auswahl eines Nachrichtensignals als Taktreferenz zu verbessern wurde eine Synchronisationsstatusmeldung (SSM) eingeführt, die als Teil des Nachrichtensignals mitübertragen wird. Die SSM gibt die Qualität des Referenztaktes an, auf den das sendende Netzelement synchronisiert ist. Die Auswahl einer Taktreferenz geschieht anhand der SSM, indem ein Netzelement stets das Nachrichtensignal als Taktreferenz auswählt, dessen SSM die höchste Taktqualität anzeigt. Es wurde auch die Nachricht ,DNU" (do not use for synchronization") als SSM festgelegt, die in die Rückrichtung zu dem Netzelement gesendet werden soll, dessen Nachrichtensignal als Taktreferenz ausgewählt wurde.

Bei der Synchronisation muß strikt darauf geachtet werden, daß keine Taktschleifen gebildet werden, d.h. daß nicht zwei Netzelemente sich gegenseitig als Synchronisationstaktquelle auswählen. Die Gefahr der Bildung von Taktschleifen ist besonders dann gegeben, wenn zwischen zwei Netzelementen mehrere parallele Übertragungswege vorhanden sind. Solche parallelen Übertragungswege werden auch als Bündel bezeichnet. Durch die Verwendung der SSM DNU" allein kann nicht in allen möglichen Situationen die Bildung von Taktschleifen vermieden werden.

In der Europäischen Patentanmeldung EP 0 723 344 wird vorgeschlagen, zur Vermeidung von Taktschleifen zwei Klassen von Schnittstelleneinrichtungen zu definieren, wobei nur Nachrichtensignale, die an einer Schnittstelleneinrichtung der ersten Klasse empfangen werden als Taktreferenz ausgewählt werden dürfen, jedoch Nachrichtensignale, die an Schnittstelleneinrichtungen der zweiten Klasse empfangen werden, bei der Auswahl eines Referenztaktes zu ignorieren sind. Durch geeignete Konfiguration des Netzes, indem beispielsweise nur Schnittstellen der ersten Klasse mit Schnittstellen der zweiten Klasse verbunden werden, lassen sich Taktschleifen vermeiden. Diese Lösung ist jedoch fehleranfällig, da es auf die richtige Konfiguration des Netzes ankommt. Insbesondere bei Bündeln paralleler Übertragungswege können sich leicht Fehler in die Konfiguration einschleichen, die dann zur Bildung von Synchronisationsschleifen führen.

Die Europäische Patentanmeldung EP 0 849 904 schlägt einen anderen Weg zur Vermeidung von Taktschleifen vor: Die Auswahl eines Referenztaktes soll in einem zentralen Taktgenerator eines Netzknotens vorgenommen werden. Die ausgewählte Taktquelle wird einer zentralen Netzwerkverwaltungseinrichtung mitgeteilt, die daraufhin alle Netzelemente des Knotens, die ihren Referenztakt von dem zentralen Taktgenerator des Knotens empfangen, instruiert, welche SSM jedes Netzelement an welchem seiner Ausgänge zu senden hat. Dadurch läßt sich erreichen, daß an allen Ausgängen, bei denen die Gefahr einer Taktschleifenbildung besteht, die SSM DNU" gesendet werden kann, wodurch die Bildung Taktschleifen wirksam verhindert wird. Dieses Verfahren ist jedoch aufwendig, da die Netzwerkverwaltungseinrichtung jedem Netzelement für jeden seiner Ausgänge explizit eine zu sendende SSM zuweisen muß. Auch hierbei kommt es wesentlich auf die richtige Konfiguration des Netzes an. Zudem müssen mehrere Taktschnittstellen mit Mitteln zum Übertragen einer SSM zwischen Taktgenerator und Netzelementen vorgesehen werden. Dies ist technisch ebenfalls aufwendig und bei derzeit erhältlichen Netzelementen nicht vorgesehen.

Aufgabe der Erfindung ist es, ein Verfahren zur Synchronisation eines Netzelementes anzugeben, bei dem die Gefahr der Bildung von Taktschleifen insbesondere bei parallelen Übertragungspfaden vermindert ist, welches aber mit einfachen technischen Mitteln auskommt. Weitere Aufgaben der Erfindung bestehen darin, ein Netzelement und eine Netzwerkverwaltungseinrichtung anzugeben, die zur Durchführung des Verfahrens geeignet sind.

Die Aufgabe wird hinsichtlich des Verfahrens gelöst durch die Merkmale des Anspruchs 1, hinsichtlich des Netzelementes durch die Merkmale des Anspruchs 6 und hinsichtlich der Netzwerkverwaltungseinrichtung durch die Merkmale des Anspruchs 7. Vorteilhafte Ausgestaltungen sind den abhängigen Ansprüchen zu entnehmen.

Im folgenden wird die Erfindung anhand der Figuren 1-5 in zwei Ausführungsbeispielen beschrieben. Es zeigt:
- Figur 1:: Ein synchrones digitales Nachrichtenübertragunsgnetz,
- Figur 2:: ein Blockdiagramm eines erfindungsgemäßen Netzelementes und einer Netzwerkverwaltungseinrichtung,
- Figur 3:: ein Flußdiagramm des erfindungsgemäßen Verfahrens,
- Figur 4:: ein Blockdiagramm der erfindungsgemäßen Netzwerverwaltungseinrichtung und
- Figur 5:: ein Blockdiagramm eines Netzknotens.

Eine Grundidee der Erfindung besteht darin, die Auswahl einer Taktreferenz nicht von einem Netzelement oder von einem zentralen Taktgenerator durchzuführen, sondern von einer zentralen Netzwerkverwaltungseinrichtung. In der ohnehin vorhandenen Netzwerkverwaltungseinrichtung sind alle Informationen über den Aufbau und die Konfiguration des Netzes gespeichert. Eine weitere Grundidee besteht nun darin, daß ein Netzelement, wenn es die Notwendigkeit für eine neue Auswahl feststellt, der Netzwerkverwaltungseinrichtung für alle an seinen Eingängen empfangenen Nachrichtensignale die darin jeweils enthaltenen Synchronisationsstatusmeldungen überträgt und die Netzwerkverwaltungseinrichtung dann anhand der übertragenen Synchronisationsstatusmeldungen und anhand der gespeicherten Informationen über den Aufbau und die Konfiguration des Netzes eines der empfangenen Nachrichtensignale als neue Taktreferenz auswählt und dem Netzelement diese Auswahl mitteilt.

Bekanntermaßen kann die Informationsübertragung zwischen Netzelementen und der zentralen Netzwerkverwaltungseinrichtung über die vorhandenen Q-Schnittstellen einige Sekunden bis Minuten betragen. Die Erfindung basiert aber auf der Erkenntnis, daß es zu keiner wesentliche Beeinträchtigung der Nachrichtenübertragung in dem Nachrichtenübertragungsnetz führt, wenn nach einem Verlust oder einer Störung seiner Referenztaktquelle ein Netzelement nicht umgehend neu synchronisiert wird. Entsprechend der Erfindung schaltet ein Netzelement in diesem Fall auf den freien, unsynchronisierten Betrieb um - den sogenannten Holdover-Modus - und wartet bis es von der Netzkwerksteuerungseinrichtung eine neue Auswahl mitgeteilt bekommt. Verzögerungen bis zu einigen Minuten durch die Informationsübertragung über die Q-Schnittstelle sowie Warte- und Bearbeitungszeiten in der Netzwerkverwaltungseinrichtung sind für den Betrieb des Netzes unkritisch.

Alternativ kann ein Netzelement nach dem Verlust seiner Referenztaktquelle auch wie im Stand der Technik üblich selbst eine neue Referentaktquelle auswählen. Diese Auswahl ist dann jedoch vorübergehend, um die Zeitspanne zu überbrücken, bis von der Netzwerkverwaltungseinrichtung eine neue Referenztaktquelle ausgewählt wurde. Nach Mitteilung einer neuen Referenztaktquelle durch die Netzwerkverwaltungseinrichtung schaltet das Netzelement auf die mitgeteilte um.

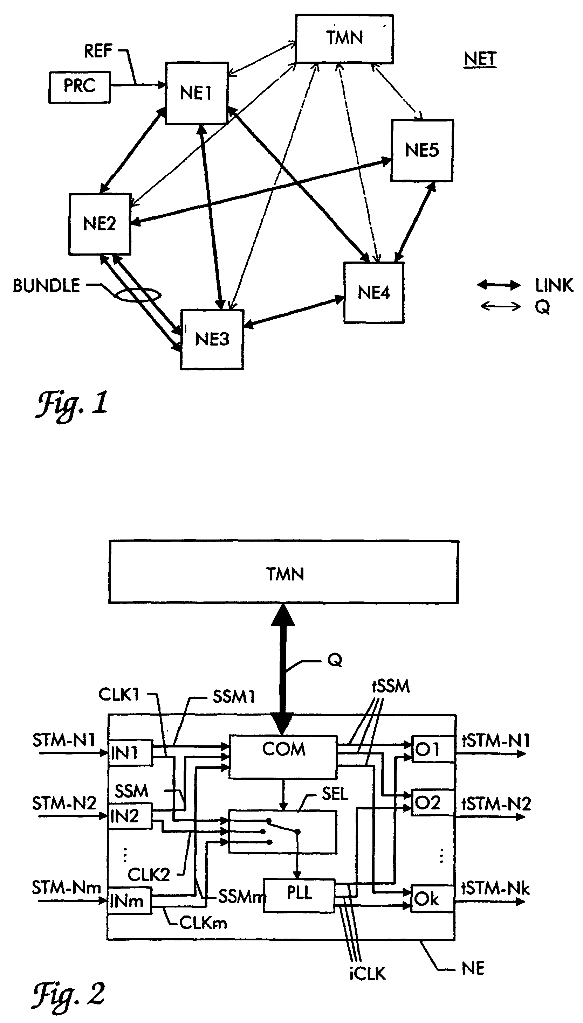

Ein synchrones digitales Nachrichtenübertragungsnetz NET, welches nach den Empfehlungen für Synchrone Digitale Hierarchie (SDH) arbeitet, ist in Figur 1 dargestellt. Es besteht aus einer Reihe untereinanden durch optische oder elektrische Übertragungsmedien LINK bidirektional verbundene Netzelemente NE1 -NE5 und aus einer zentralen Netzwerksverwaltungseinrichtung TMN. Die Netzwerkverwaltungeeinrichtung TMN dient dazu, logische Verbindungen zwischen den Netzelementen zu schalten, Fehlermeldungen und Alarme zu überwachen und das Netz NET zu konfigurieren. Außerdem hat sie nach dem erfindungsgemäßen Verfahren die Aufgabe, jedem Netzelement eine Referenztaktquelle zuzuweisen. Eine solche Netzwerkverwaltungseinrichtung wird auch oft als Netzwerkmanagement bezeichnet. Ein hochgenauer Referenztakt REF wird am Netzelemenet NE1 von einem primären Referenztaktgenerator (primäry reference clock) PRC in das Netz eingespeist.

Die Netzelemente NE1-NE5 tauschen untereinander über die Übertragungsmedien LINK synchrone Nachrichtensignale aus, die in Form von synchronen Transportmodulen STM-N strukturiert sind. Die Synchronisation erfolgt, indem für jedes Netzelement ein empfangenes Nachrichtensignal als Taktreferenz auswählt wird, das Netzelement von dem ausgewählten Nachrichtensignal ein Taktsignal ableitet und seinen internen Taktgenerator mit diesem Taktsignal abstimmt. Fällt eine Verbindung zwischen zwei Netzelementen aufgrund eines Defektes aus, so kann eine Neusynchronisation erforderlich werden. Dabei wird für die betroffenen Netzelemente ein anderes empfangenes Nachrichtensignal als neue Taktreferenz ausgewählt.

Die Auswahl einer Referenztaktquelle erfolgt anhand von den synchronen Transportmodulen enthaltenen und mitübertragenen Synchronisationsstatusmeldungen SSM, die jeweils die Taktqualität des sendenen Netzelementes angeben. Für die SSM sind die in Tabelle 1 aufgeführten Meldungen definiert.

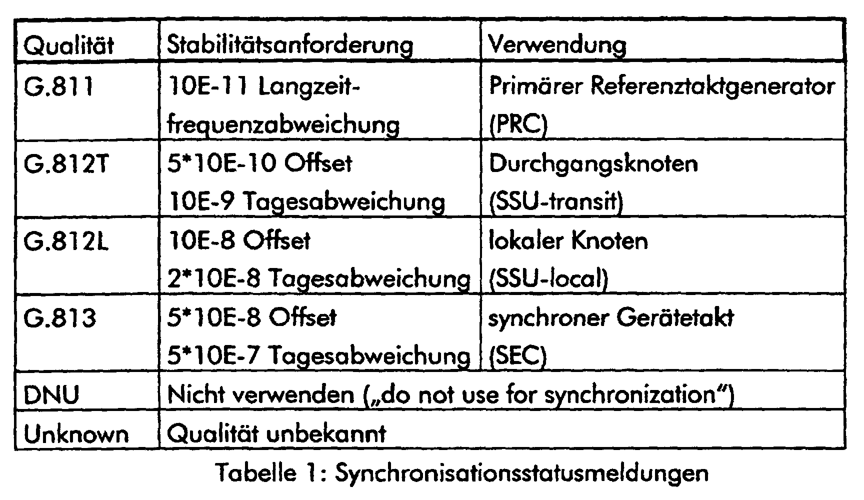

Wählt ein Netzelement ein anderes anhand der SSM als Referenztaktquelle aus, so muß es in die Rückrichtung die SSM DNU" senden, um das ausgewählte Netzelement davon in Kenntnis zu setzen, daß die Nachrichtensignale in Rückrichtung nicht ebenfalls als Taktreferenz verwendet werden dürfen, da ansonsten eine Taktschleife gebildet würde. Ebenso müßte auf Bündeln BUNDLE von parallelen Übertragungspfaden, wie dies in der Figur zwischen den Netzelementen NE2 und NE3 gezeigt ist, auf beiden Verbindungen die SSM DNU" gesendet werden. Eine Taktschleife könnte auch über mehrere Netzelemente gebildet werden, die ringförmig untereinander verbunden sind, wie z.B. die Netzelemente NE2, NE3, NE4, NE5 in der Zeichnung. Die Bildung von Taktschleifen bei einer solchen Konfiguration kann durch Verwendung der SSM allein nicht vermieden werden. Da jedoch erfindungsgemäß die Auswahl einer Referenztaktquelle für jedes Netzelement in der Netzwerkverwaltungseinrichtung TMN vorgenommen wird, und diese über alle notwendigen Informationen über die Konfiguration des Netzes verfügt, kann unter Berücksichtigung der jeweils empfangenen SSM und der Informationen über die Netzkonfiguration die Bildung von Taktschleifen bei der Synchronisation oder Neusynchronisation eines Netzelementes nach einem Ausfall wirksam vermieden werden. Vorteilhaft wird neben der Konfiguration des Netzes auch die Information über die ausgewählten Referenztaktquellen der einzelen Netzelemente bei der Auswahl berücksichtigt.

In Figur 2 ist ein Ausführungsbeispiel eines erfindungsgemäßen Netzelementes gezeigt. Ein Netzelement NE hat m Eingänge, an denen es jeweils ein Nachrichtensignal STM-N1 bis STM-Nm empfängt. Die Nachrichtensignale sind als synchrone Transportmodule STM-N der Multiplexstufe N (N=1, 2, 4, 16, ...) für SDH-Systeme strukturiert. Über eine Q-Schnittstelle Q steht das Netzelement mit einer zentralen Netzwerkverwaltungseinrichtung TMN in Verbindung. In dem Blockdiagramm sind bei dem Netzelemenet NE nur die zur Synchronisation wichtigen Einrichtungen und Verbindungen gezeigt.

Das Netzelement NE weist an den m Eingängen jeweils Schnittstellenschaltung IN1 -INm auf. In jeder Schnittstellenschaltung wird aus dem empfangenen Nachrichtensignal jeweils ein Taktsignal CLK1 -CLKm abgeleitet. Die Taktsignale CLK1-CLKm werden über entsprechende Verbindungen einer Auswahleinrichtung SEL zugeführt. In den Schnittstellenschaltungen IN1 -INm werden auch Synchronisationsstatusmeldungen SSM1 -SSMm, die in einem Kopfbereich (Overhead) der synchronen Transportmodule STM-N1 bis STM-Nm enthalten sind, gelesen und an eine Verbindungseinrichtung COM geleitet. Die Verbindungseinrichtung COM steht über die Q-Schnittstelle Q mit der Netzwerkverwaltungeinrichtung TMN in Verbindung. Sie sendet die Synchronisationsstatusmeldungen SSM1-SSMm zusammen mit einer Information, von welchem der empfangenen Nachrichtensignale die jeweilige Synchronisationsstatusmeldung stammt an die Netzwerkverwaltungeinrichtung TMN. Die Netzwerkverwaltungseinrichtung TMN wertet dann die Synchronisationsstatusmeldungen aus und wählt anhand der Synchronisationsstatusmeldungen und anhand von gespeicherten Informationen über die Konfiguration des Nachrichtenübertragungsnetzes eines der abgeleiteten Taktsignale CLK1-CLKm als Taktreferenz aus. Diese Auswahl teilt sie dem Netzelement NE über die Q-Schnittstelle an die Verbindungseinrichtung COM mit. Die Verbindungseinrichtung COM leitet die Mitteilung an die Auswahleinrichtung SEL weiter, welche daraufhin das ausgewählte Taktsignal an einen internen TaktgeneratorPLL durchschaltet. Bei der Verbindungseinrichtung COM kann es sich z.B. um die Steuerungseinrichtung des Netzelementes, den sogenannten Netzelement-Manager handeln.

Der interne Taktgenerator PLL kann beispielsweise eine digitale Phasenregelschleife sein, die im freien unsynchronisierten Betrieb ein Taktsignal mit der in ITU-T G.812 festgelegten Taktqualität erzeugt. Ist von der Auswahleinrichtung SEL ein Taktsignal zu dem internen Taktgenerator PLL durchgeschaltet, so synchronisiert das Taktsignal den Taktgenerator PLL. Ein Ausgangssignal iCLK des Taktgererators PLL wird als interner Referenztakt an alle Ausgangsschaltungen O1-Ok verteilt. Zu sendende Nachrichtensignale tSTM-N werden infolgedessen mit dem internen Referenztakt iCLK erzeugt und gesendet.

Üblicherweise befinden sich Taktableitungsschaltungen in zumindest einigen der Schnittstellenschaltungen IN1-INm des Netzelementes NE, so daß von den an diesen Schnittstellenschaltungen empfangenen Nachrichtensignalen STMN1-STMNm jeweils Taktsignale CLK1-CLKm abgeleitet werden. Von diesen Taktsignalen wird dann von der Auswahleinrichtung SEL entsprechend der Auswahl der Netzwerkverwaltungseinrichtung TMN eines als Referenztakt ausgewählt. Alternativ kann jedoch auch nur eine Taktableitungsschaltung vorgesehen sein, die von dem jeweils ausgewählten Nachrichtensignal das Referenztaktsignal ableitet.

Bei einer bevorzugten Ausführung teilt die Netzwerkverwaltungseinrichtung dem Netzelement NE über die Q-Schnittstelle Q und die Verbindungseinrichtung COM auch eine zu sendende Synchronisationsstatusmeldung tSSM für jeden Ausgang O1-Ok mit. Dies ermöglicht die Verwendung der SSM DNU" (Do Not Use for Synchronization") in alle Richtungen zur ausgewählten Referenztaktquelle, so daß Netzelemente, die nicht nach dem erfindungsgemäßen Synchronisationsverfahren arbeiten, sondern anhand der SSM selbst eine Auswahl treffen, ebenfalls in dem Nachrichtenübertragungsnetz betrieben werden können. Alternativ kann das Netzelement NE auch, wie dies von der Standardisierung vorgesehen ist, die SSM des als Taktreferenz ausgewählten empfangenen Nachrichtensignal verwenden, denn die Bildung von Taktschleifen wird durch die Netzwerkverwaltungeinrichtung TMN aufgrund der Berücksichtigung der dort gespeicherten Informationen über Aufbau und Konfiguration des Nachrichtenübertragungsnetzes vermieden.

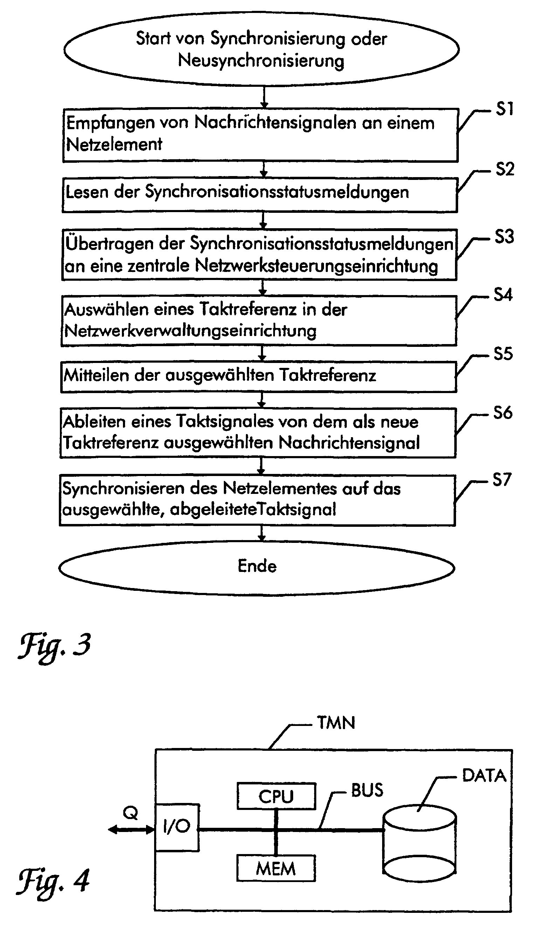

Das erfindungsgemäße Verfahren des Ausführungsbeispiels ist als Flußdiagramm in Figur 3 abgebildet. Das Verfahren wird durchgeführt, wenn ein Netzelement synchronisiert werden soll oder wenn ein Netzelement aufgrund einer Störung seine bisherige Referenztaktquelle verloren hat und neu synchronisiert werden soll. Das Verfahren enthält die folgenden Schritte:

| | |
|---|---|
| Schritt S1 | An dem zu synchronisierenden Netzelement werden mehrere Nachrichtensignale empfangen. Eines dieser Nachrichtensignale soll als neue Taktreferenz verwendet werden. Alle empfangenen Nachrichtensignale enthalten eine Synchronisationsstatusmeldung. |
| Schritt S2 | Die Synchronisationsstatusmeldungen der einzelnen empfangenen Nachrichtensignale werden von dem Netzelement gelesen. |
| Schritt S3 | Das Netzelement übertragt die gelesenen Synchronisationsstatusmeldungen zusammen mit einer Information, von weichem Nachrichtensignal die jeweilige Synchonisationsstatusmeldung stammt oder an welchem Eingang das betreffende Nachrichtensignal empfangen wurde, an die zentrale Netzwerkverwaltungseinrichtung. |
| Schritt S4 | Die Netzwerkverwaltungseinrichtung wählt anhand der Synchronisationsstatusmeldungen, der empfangenen Information über die Herkunft der jeweiligen Synchronisationsstatusmeldung |
| | und anhand der gespeicherten Informationen über Aufbau und Konfiguration des Nachrichtennetzes eines der Nachrichtensignale als neue Taktreferenz aus. |
| Schritt S5 | Die Netzwerkverwaltungseinrichtung teilt dem Netzelement die getroffene Auswahl mit. |
| Schritt S6 | Das Netzelement leitet von dem ausgewählten Nachrichtensignal ein Taktsignal ab. |
| Schritt S7 | Mit dem von dem ausgewählten Nachrichtensignal abgeleiteten Taktsignal gleicht es seinen internen Taktgenerator ab, um sich auf die neue Referenztaktquelle zu synchronisieren. |

Die in Figur 4 gezeigte Netzwerkverwaltungseinrichtung besitzt Mittel zum Empfangen der von einem Netzelement übertragenen Synchronisationsstatusmeldungen, Mittel zum Speichern von Informationen über Aufbau und Konfiguration des Nachrichtennetzes und Mittel zur Auswahl einer Taktreferenz für ein Netzelement anhand der übertragenen Synchronisationsstatusmeldungen und anhand von gespeicherten Informationen. Vorteilhaft enthält die Netzwerkverwaltungseinrichtung eine Q-Schnittstellenschaltung I/O, die mit der für Nachrichtenübertragungsnetze spezifizierten Q-Schnittstelle Q verbunden ist, einen Halbleiterspeicher MEM zum Zwischenspeichern von einer Auswahlanforderung eines Netzelementes und von Zwischenergebnissen des Auswahlalgorithmus, einen Datenspeicher mit einer Datenbank DATA, beispielsweise in Form einer Festplatte, einen Prozessor CPU, der mittels eines Steuerprogrammes die Auswahl durchführt, sowie ein Bussystem, welches Q-Schnittstellenschaltung I/O, Halbleiterspeicher MEM, Datanspeicher DATA und Prozessor CPU verbindet. Die in dem Datenspeicher enthaltene Datenbank enthält alle Informationen über Aufbau und Konfiguration des Nachrichtennetzes.

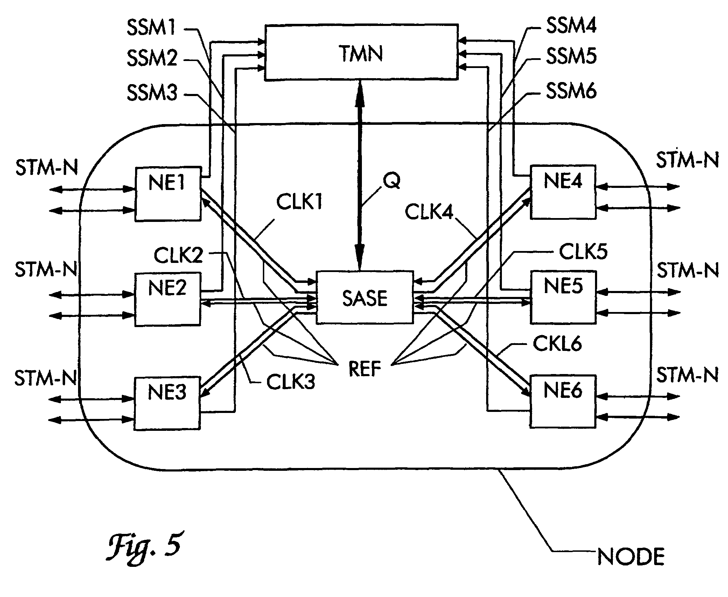

Genauso wie für die Auswahl einer Referenztaktquelle eines einzelnen Netzelementes ist die Erfindung anwendbar bei der Auswahl einer Referenztaktquelle für einen Netzknoten NODE, der mehrere Netzelemente NE1 -NE6 und einen zentralen Knotentaktgenerator SASE enthält. Dies ist in Figur 5 als zweites Ausführungsbeispiel schematisch gezeigt. Der Netzknoten NODE enthält sechs Netzelemente NE1-NE6 und den zentralen Knotentaktgenerator SASE. Der Knotentaktgenerator SASE kann sowohl als separates Gerät in dem Knoten aufgestellt sein als auch in eines der Netzelemente, vorzugsweise einen Crossconnect, integriert sein. Jedes der Netzelemente NE1 -NE6 sendet ein aus einem empfangenen Nachrichtensignal STM-N abgeleitetes Taktsignal CLK1-CLK6 an den Knotentaktgenerator SASE. Der Knotentaktgenerator synchronisiert sich auf eines dieser Taktsignale und sendet ein gemeinsames Referenztaktsignal REF an alle Netzelemente zurück. Die Netzelemente NE1-NE6 synchronisieren sich wiederum auf das von dem Knotentaktgenerator SASE empfangene Referenztaktsignal REF.

Der Netzknoten NODE steht mit einer zentralen Netzwerkverwaltungseinrichtung TMN in Verbindung. Und zwar ist sowohl jedes der Netzelemente mit der Netzwerkverwaltungseinrichtung TMN verbunden als auch der zentrale Knotentaktgenerator SASE. Die Netzelemente senden an die Netzwerkverwaltungseinrichtung TMN die Synchronisationsstatusmeldung SSM1-SSM6, die in dem empfangenen Nachrichtensignal enthalten ist, aus dem das jeweilige an den Knotentaktgenerator SASE weitergeleitete Taktsignal CLK1-CLK6 abgeleitet ist. Anhand der mitgeteilten Synchronisationsstatusmeldungen SSM1-SSM6 und anhand in der Netzwerkverwaltungseinrichtung TMN gespeicherten Daten über Aufbau und Konfiguration des Nachrichtenübertragungsnetzes wählt die Netzwerkverwaltungseinrichtung TMN eines der Taktsignale CLK1-CLK6 als Referenztaktquelle für den Netzknoten NODE aus. Die Auswahl teilt die Netzwerkverwaltungseinrichtung TMN dem zentralen Knotentaktgenerator SASE über die Q-Schnittstelle Q mit. Der Knotentaktgenerator SASE synchronisiert sich daraufhin auf das ausgewählte Taktsignal. Vorzugsweise teilt die Netzwerkverwaltungseinrichtung TMN den einzelnen Netzelementen NE1-NE6 auch noch aufgrund der Qualität der ausgewählten Taktreferenz mit, welche Synchronisationsstatusmeldung diese an ihren Ausgängen senden sollen (siehe Tabelle 1). Für die Übertragung der Synchronisationsstatusmeldungen SSM1-SSM6 kann ebenfalls die ohnehin zwischen Netzelementen und der Netzwerkverwaltungseinrichtung TMN vorhandene Q-Schnittstelle verwendet werden.

Die Netzelemente NE1-NE6 stellen vorzugsweise Add/Drop-Multiplexer und einen Crossconnect dar. Bei dem Netzknoten kann es sich um die in einer Vermittlungsstelle aufgestellten Netzelemente des synchronen digitalen Nachrichtenübertragungsnetzes handeln, über das die Vermittlungsstelle ihren Fernverkehr abwickelt. Der Knotentaktgenerator ist vorzugsweise in den Crossconnect integriert und wird zusätzlich als interner Taktgenerator des Crossconnects verwendet. Der Knotentaktgenerator SASE ist für die Taktaufbereitung und Taktverteilung des einheitlichen Referenztaktsignales REF des Netzknotens NODE zuständig. Er steht wie die Netzelemente mit der Netzwerkverwaltungseinrichtung TMN über die Q-Schnittstelle in Verbindung. Wenn der Knotentaktgenerator SASE als eigenständiges Gerät ausgeführt ist, kann er im Sinne der Erfindung auch als Netzelement angesehen werden, wobei dessen Eingangssignale die von den übrigen Netzelementen des Knotens empfangenen Taktsignale CLK1-CLK6 sind. Bei den Taktsignalen kann es sich um 2 MHz-Signale handeln oder auch um 2 MBit-Signale in denen die Synchronisationsstatusmeldung auch an den Knotentaktgenerator übertragen werden kann.

Es ist weiterhin möglich, daß eines oder mehrere der Netzelemente NE1-NE6 das Taktsignal CLK1-CLK6, welches diese an den Knotentaktgenerator SASE senden, abschalten, z.B. wenn eine Störung auftritt. Diese Funktion wird als Squelch bezeichnet. Wenn es sich dabei gerade um das Taktsignal handelt, auf welches der Knotentaktgenerator sich synchronisiert, dann besteht die Notwendigkeit eine neue Auswahl zu treffen. Der Knotentaktgenerator stellt fest, daß das Eingangssignal, auf das er sich synchronisiert, ausgefallen ist und teilt der Netzwerkverwaltungseinrichtung TMN mit, daß eine neue Auswahl erforderlich ist. Die Netzwerkverwaltungseinrichtung TMN führt dann nach dem erfindungsgemäßen Verfahren die Auswahl durch und teilt dem Knotentaktgenerator SASE die neue Auswahl über die Q-Schnittstelle Q mit. In der Zwischenzeit schaltet der Knotentaktgenerator auf unsynchronisierten Betrieb (sogenannten Holdover-Modus) um.

## Patentansprüche

1. Verfahren zur eines Netzelements (NE; NE1-NE6) in einem synchronen digitalen Nachrichtenübertragungsnetz (NET), mit folgenden Schritten:
- Empfangen von mehreren synchronen digitalen Nachrichtensignalen (STM-N1 - STM-Nm) an Eingängen (IN1-INm) des Netzelementse (NE; NE1-NE6),
- Auswerten von in den Nachrichtensignalen (STM-N1 - STM-Nm) jeweils enthaltenen Synchronisationsstatusmeldungen (SSM1-SSMm),
- Auswählen eines der Nachrichtensignale als Taktreferenz anhand der Synchronisationsstatusmeldungen (SSM1-SSMm),
- Ableiten eines Taktsignals (CLK1-CLKm) von dem ausgewählten Nachrichtensignal und
- Synchronisieren desf Netzelementse (NE; NE1-NE6) auf das abgeleitete Taktsignal,
**dadurch gekennzeichnet, daß**
das Netzelement (NE; NE1-NE6) die Synchronisationsstatusmeldungen (SSM1-SSMm) an eine zentrale Netzwerkverwaltungseinrichtung (TMN) überträgt, daß die Netzwerkverwaltungseinrichtung (TMN) anhand der Synchronisationsstatusmeldungen (SSM1-SSMm) und anhand von gespeicherten Informationen über den Aufbau des Nachrichtenübertragungsnetzes (NET) eines der Nachrichtensignale auswählt und daß die Netzwerkverwaltungseinrichtung (TMN) dem Netzelement (NE; NE1-NE6) das ausgewählte Nachrichtensignal mitteilt, das es zur Synchronisation verwenden soll.

2. Verfahren nach Anspruch 1, bei dem die Netzwerkverwaltungseinrichtung dem Netzelement ferner mitteilt, welche Synchronisationsstatusmeldung sie es an seinen Ausgängen senden sollen.

3. Verfahren nach Anspruch 1, bei dem das Netzelement, dessen bisherige Referenztaktquelle ausgefallen ist, solange in den unsynchronisierten Betrieb umschaltet, bis ihm von der Netzwerkverwaltungseinrichtung die Auswahl eines anderen der empfangenen Nachrichtensignale als neue Referenztaktquelle mitgeteilt wird.

4. Verfahren nach Anspruch 1,
- bei dem mehrere Netzelemente (NE1-NE6) zu einem Netzknoten (NODE) angeordnet sind,
- bei dem der Netzknoten (NODE) einen zentralen Knotentaktgenerator (SASE) aufweist und die Netzwerkverwaltungseinrichtung (TMN) nicht den einzelnen Netzelementen sondern dem Knotentaktgenerator (SASE) mitteilt, auf welches der an einem der Netzelemente (NE1-NE6) des Netzknotens (NODE) empfangenen Nachrichtensignalen (STM-N) er sich synchronisieren soll und
- bei dem der Knotentaktgenerator (SASE) sich dann auf ein aus dem ausgewählten Nachrichtensignal abgeleitetes Taktsignal (CLK1-CLK6) synchronisiert und ein Referenztaktsignal (REF) an die Netzelemente (NE1-NE6) des Netzknotens (NODE) verteilt, auf das diese sich synchronisieren.

5. Verfahren nach Anspruch 4, bei dem der zentrale Knotentaktgenerator in eines der Netzelemente des Netzknotens integriert ist.

6. Netzelement (NE; NE1 -NE6) für ein synchrones digitales Nachrichtenübertragungsnetz (NET) mit
- Mitteln (IN1-INm) zum Empfangen von Nachrichtensignalen (STM-N1-STM-Nm),
- Mitteln zum Lesen einer in den Nachrichtensignalen (STM-N1 - STM-Nm) jeweils enthalten Synchronisationsstatusmeldung (SSM1-SSMm),
- Mitteln zum Ableiten von zumindest einem Taktsignal (CLK1-CLKm) aus zumindest einem der empfangenen Nachrichtensignale (STM-N1-STM-Nm), und mit
- Mitteln zum Abgleichen eines internen Taktgenerators (PLL) mit dem abgeleiteten Taktsignal (CLK1-CLKm)
**gekennzeichnet durch**
- Mittel (COM) zum Übertragen der gelesenen Synchronisationsstatusmeldung (SSM1-SSMm) an eine zentrale Netzwerkverwaltungseinrichtung (TMN) zwecks Auswahl eines der empfangenen Nachrichtensignale (STM-N1 - STM-Nm) als Taktreferenz,
- Mittel (COM) zum Empfangen einer Mitteilung der Netzwerkverwaltungseinrichtung betreffend die getroffene Auswahl, und
- Mittel zum Abgleichen des internen Taktgenerators (PLL) mit dem von dem ausgewählten Nachrichtensignal abgeleiteten Taktsignal.

7. Netzwerkverwaltungseinrichtung (TMN) zur Steuerung eines Netzelements (NE; NE1-NE6) eines synchronen digitalen Nachrichtenübertragungsnetzes (NET) **gekennzeichnet durch**
- Mittel (I/O) zum Empfangen der von dem Netzelement (NE; NE1-NE6) übertragenen Synchronisationsstatusmeldungen (SSM1-SSMm),
- Mittel (DATA) zum Speichern von Informationen über Aufbau und Konfiguration des Nachrichtenübertragungsnetzes (NET),
- Mittel (CPU) zur Auswahl einer Taktreferenz für das Netzelemente (NE; NE1-NE6) anhand der übertragenen Synchronisationsstatusmeldungen (SSM1-SSMm) und anhand der gespeicherten Informationen (DATA) und
- Mittel (I/O) zum Übertragen einer Mitteilung (Q) betreffend die getroffene Auswahl an das Netzelement (NE; NE1-NE6).

## Claims

1. A method for synchronization of a network element (NE; NE1-NE6) in a synchronous digital communication network (NET) with the following steps:
- Receiving of several synchronous digital information signals (STM-N1 - STM-Nm) at inputs (IN1-INm) of the network element (NE; NE1-NE6),
- Evaluation of synchronization status reports contained in each of the information signals (STM-N1 - STM-Nm),
- Selection of one of the information signals as clock reference based on the synchronization status reports (SSM1-SSMm),
- Derivation of a clock signal (CLK1-CLKm) from the selected information signal and
- Synchronizing of the network element (NE; NE1-NE6) on the derived clock signal,
**characterized in that**
the network element (NE; NE1-NE6) transmits the synchronization status reports (SSM1-SSMm) to a central network management device (TMN), that the network management device (TMN) uses the synchronization status reports (SSM1-SSMm) and the stored information about the structure of the communication network (NET) to select one of the information signals and that the network management device (TMN) notifies the network element (NE; NE1-NE6) of the selected information signal that it should use for synchronization.

2. Method according to Claim 1, in which the network management device further tells the network element which synchronization status report it should send to its outputs.

3. Method according to Claim 1, in which the network element, whose previous reference clock source has failed, switches to unsynchronized operation until the network management device notifies it of the selection of another of the received information signals as the new reference clock source.

4. Method according to Claim 1,
- in which several network elements (NE1-NE6) are arranged in a network node (NODE),
- in which the network node (NODE) has a central node clock generator (SASE) and the network management device (TMN) notifies the node clock generator (SASE), and not the individual network elements, which of the information signals (STM-N) received at one of the network elements (NE1-NE6) of the network node (NODE) it should synchronize itself on and
- in which the node clock generator (SASE) then synchronizes itself on a clock signal (CLK1-CLK6) derived from the selected information signal and distributes to the network elements (NE1-NE6) of the network node (NODE) a reference clock signal (REF), on which they synchronize themselves.

5. Method according to Claim 4, in which the central node clock generator is integrated in one of the network elements of the network node.

6. Network element (NE; NE1-NE6) for a synchronous digital communication network (NET) with
- means (IN1-INm) for receiving information signals (STM-N1 - STM-Nm),
- means of reading a synchronization status report (SSM1-SSMn) contained in each of the information signals (STM-N1 - STM-Nm),
- means of deriving at least one clock signal (CLK1-CLKm) from at least one of the received information signals (STM-N1 - STM-Nm), and with
- means of adjusting an internal clock generator (PLL) with the derived clock signal (CLK1-CLKm)
**characterized by**
- means (COM) for transmitting the synchronization status report (SSM1-SSMm) after reading, to a central network management device (TMN) for the purpose of selection of one of the received information signals (STM-N1 - STM-Nm) as clock reference,
- means (COM) of receiving a notification from the network management device concerning the chosen selection, and
- means of adjusting the internal clock generator (PLL) with the clock signal derived from the selected information signal.

7. Network management device (TMN) for control of a network element (NE; NE1 - NE6) of a synchronous digital communication network (NET), **characterized by**
- means (I/O) of receiving the synchronization status reports (SSM1-SSMm) transmitted from the network element (NE; NE1-NE6),
- means (DATA) for storing information about structure and configuration of the communication network (NET),
- means (CPU) for selecting a clock reference for the network element (NE; NE1-NE6) using the transmitted synchronization status reports (SSM1-SSMm) and using the stored information (DATA) and
- means (I/O) of transmitting a notification (Q) concerning the chosen selection to the network element (NE; NE1-NE6).

## Revendications

1. Procédé pour la synchronisation d'un élément de réseau (NE ; NE1-NE6) dans un réseau de communication synchrone numérique (NET) avec les étapes suivantes :
- Réception de plusieurs signaux de communication synchrones numériques (STM-N1 - STM-Nm) sur des entrées (IN1- INMm) de l'élément de réseau (NE ; NE1-NE6),
- Exploitation de messages d'état de synchronisation (SSM1-SSMm) respectivement contenus dans les signaux de communication (STM-N1 - STM-Nm),
- Sélection, sur la base des messages d'état de synchronisation (SSM1-SSMm), d'un des signaux de communication comme référence de cadencement,
- Récupération par dérivation d'un signal de cadencement (CLK1-CLKm) à partir du signal de communication sélectionné et
- Synchronisation de l'élément de réseau (NE ; NE1-NE6) sur le signal de cadencement récupéré par dérivation, **caractérisé en ce que** l'élément de réseau (NE ; NE1-NE6) transmet les messages d'état de synchronisation (SSM1-SSMm) à un dispositif de gestion de réseaux central (TMN), **en ce que** le dispositif de gestion de réseaux (TMN) sélectionne alors un des signaux de communication sur la base des messages d'état de synchronisation (SSM1-SSMm) et sur la base d'informations mémorisées concernant la structure du réseau de communication (NET) et **en ce que** le dispositif de gestion de réseaux (TMN) transmet à l'élément de réseau (NE ; NE1-NE6) le signal de communication sélectionné qu'il doit utiliser pour la synchronisation.

2. Procédé selon la revendication 1, **caractérisé en ce que** le dispositif de gestion de réseaux indique par ailleurs à l'élément de réseau quel message d'état de synchronisation il doit envoyer sur ses sorties.

3. Procédé selon la revendication 1, **caractérisé en ce que** l'élément de réseau dont la source de cadences de référence précédente est défaillante commute sur le fonctionnement non synchronisé jusqu'à ce que la sélection d'un autre signal de communication parmi ceux qui sont reçus lui est communiquée comme nouvelle source de cadences de référence par le dispositif de gestion de réseaux.

4. Procédé selon la revendication 1, **caractérisé**
- **en ce que** plusieurs éléments de réseau (NE1-NE6) sont disposés pour former un noeud de réseau (NODE),
- **en ce que** le noeud de réseau (NODE) comprend un générateur de cadences de noeud central (SASE) et le dispositif de gestion de réseaux (TMN) n'indique pas aux différents éléments de réseau mais au générateur de cadences de noeud (SASE) sur lequel des signaux de communication (STM-N) reçus sur un des éléments de réseau (NE1-NE6) du noeud de réseau (NODE) il doit se synchroniser et
- **en ce que** le générateur de cadences de noeud (SASE) se synchronise alors sur un signal de cadencement (CLK1-CLK6) récupéré par dérivation à partir du signal de communication sélectionné et distribue aux éléments de réseau (NE1-NE6) du noeud de réseau (NODE) un signal de cadencement de référence (REF) sur lequel ceux-ci se synchronisent.

5. Procédé selon la revendication 4, **caractérisé en ce que** le générateur de cadences de noeud central est intégré dans un des éléments de réseau du noeud de réseau.

6. Elément de réseau (NE ; NE1-NE6) pour un réseau de communication synchrone numérique (NET) avec
- des moyens (IN1-INm) pour la réception de signaux de communication (STM-N1 - STM-Nm),
- des moyens pour la lecture d'un message d'état de synchronisation (SSM1-SSMm) respectivement contenu dans les signaux de communication (STM-N1 - STM-Nm),
- des moyens pour récupérer par dérivation au moins un signal de cadencement (CLK1-CLKm) à partir d'un moins un des signaux de communication (STM-N1 - STM-Nm) reçus et
- des moyens pour réaliser un accord d'un générateur de cadences interne (PLL) avec le signal de cadencement récupéré par dérivation (CLK1-CLKm), **caractérisé par**
- des moyens (COM) pour la transmission du message d'état de synchronisation lu (SSM1-SSMm) à un dispositif de gestion de réseaux central (TMN) dans le but de réaliser une sélection comme référence de cadencement d'un des signaux de communication (STM-N1 - STM-Nm) reçus,
- des moyens (COM) pour la réception d'une communication provenant du dispositif de gestion de réseaux et concernant la sélection qui a été faite et
- des moyens pour réaliser un accord du générateur de cadences interne (PLL) avec le signal de cadencement récupéré par dérivation à partir du signal de communication sélectionné.

7. Dispositif de gestion de réseaux (TMN) pour la commande d'un élément de réseau (NE ; NE1-NE6) d'un réseau de communication synchrone numérique (NET), **caractérisé par**
- des moyens (I/O) pour la réception des messages d'état de synchronisation (SSM1-SSMm) transmis par l'élément de réseau (NE ; NE1-NE6),
- des moyens (DATA) pour la mémorisation d'informations concernant la structure et la configuration du réseau de communication (NET),
- des moyens (CPU) pour la sélection d'une référence de cadencement pour l'élément de réseau (NE ; NE1-NE6) sur la base des message d'état de synchronisation (SSM1-SSMm) transmis et sur la base des informations mémorisées (DATA) et
- des moyens (I/O) pour la transmission à l'élément de réseau (NE ; NE1-NE6) d'une communication (Q) concernant la sélection effectuée.
